# EUROPEAN PATENT SPECIFICATION

(11) **EP 3 530 438 B1**
(45) Date of publication and mention of the grant of the patent: **12.08.2020**
(21) Application number: 18200466.3
(22) Date of filing: 15.10.2018
(51) Int. Cl.: B29C 64/124, B29C 64/20, B29C 64/255, B33Y 30/00

(54) **THREE-DIMENSIONAL PRINTER**
DREIDIMENSIONALER DRUCKER
IMPRIMANTE TRIDIMENSIONNELLE

(30) Priority: 23.02.2018 CN 201810154541
(43) Date of publication of application: 28.08.2019
(73) Proprietor: XYZprinting, Inc., New Taipei City 22201 (TW); Kinpo Electronics, Inc., New Taipei City 22201 (TW)
(72) Inventor: LEE, An-Hsiu, New Taipei City (TW); HUANG, Chen-Fu, New Taipei City (TW); CHOU, Ching-Yuan, New Taipei City (TW); LIN, Tsai-Yi, New Taipei City (TW)
(74) Representative: Emde, Eric

(56) References cited:
- WO-A1-2018/033109
- CN-B- 104 943 164
- JP-A- H0 899 360

## Description

### BACKGROUND

### Technical Field

The disclosure relates to a three-dimensional (3D) printer.

### Description of Related Art

Along with progress of Computer-Aided Manufacturing (CAM), the manufacturing industry has developed a Rapid Prototyping (RP) technique capable of quickly producing an original design prototype. The RP technique has no limitation in geometric shape, and the more complex a printed part is, the more superior the technique demonstrates, and the RP technique may greatly save manpower and processing time, and in terms of a requirement of the shortest time, a design part on 3D CAD is truly presented, which is not only touchable, but its geometric curve may be truly felt, and assemblability of the part may be tested, and even possible functional test may be carried out.

Photopolymer is a liquid forming material commonly used by most of 3D printers, and techniques such as StereoLithography Apparatus (SLA), Digital Light Processing (DLP), Continuous Liquid Interface Production (CLIP), etc. all take the liquid forming material, for example, the photopolymer as a printing material.

Taking a pull-up SLA technique as an example, after a platform is moved into a container from top to bottom to contact the liquid forming material, a curing light source under the container provides a light to penetrate through the container to cure the liquid forming material located between the platform and the container into a forming layer, and then the forming layer is peeled off from the bottom of the container, such that the forming layer is attached to the platform, thereafter, the forming layers are stacked on the platform layer-by-layer to construct a 3D object.

During the curing process, energy of the curing light is continuously accumulated in the photopolymer, and even the photopolymer that is not supposed to be cured into the forming layer is still influenced by an energy accumulation effect to produce qualitative change, and along with the lapse of time, this part of the photopolymer still has a chance to be cured. Even if this part of the photopolymer is not substantially cured, along with a change in physical property and chemical property caused by the qualitative change, a subsequent 3D printing process is probably affected. Therefore, how to maintain the photopolymer in the container to meet the physical property and chemical property required by the 3D printing to avoid occurrence of curing during the 3D printing process or between the 3D printing processes is a problem to be resolved by related technicians of the field. Document WO-A-2018033109 discloses a three-dimensional printer according to the preamble of claim 1.

### SUMMARY

The disclosure is directed to a three-dimensional (3D) printer, in which a driving element and a stirring element are used in collaboration to provide a stirring effect to a liquid forming material in a container.

An embodiment of the disclosure provides a 3D printer including a machine platform, a container, at least one stirring element and a driving element. The container is used for containing a liquid forming material, and the container is movably assembled to the machine platform. The stirring element is disposed in the container to move along with the container, and the stirring element further has a motion mode of moving away from or moving close to a bottom of the container. The driving element is fixed on the machine platform and extends into the container. The driving element and the stirring element are mutually located on moving paths of each other. During a moving process of the container, the driving element and the stirring element lean against each other to trigger the motion mode of the stirring element to move away from or move close to the bottom of the container, so as to stir the liquid forming material in the container.

In order to make the aforementioned and other features and advantages of the disclosure comprehensible, several exemplary embodiments accompanied with figures are described in detail below.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic diagram of a 3D printer according to an embodiment of the disclosure.
FIG. 2 is a schematic diagram of the 3D printer of FIG. 1 in another state.
FIG. 3 is a diagram illustrating an electrical connection of a part of components of the 3D printer of FIG. 1.
FIG. 4 is a top view of a container of FIG. 2.
FIG. 5 is a partial schematic diagram of a 3D printer according to another embodiment of the disclosure.

### DESCRIPTION OF EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

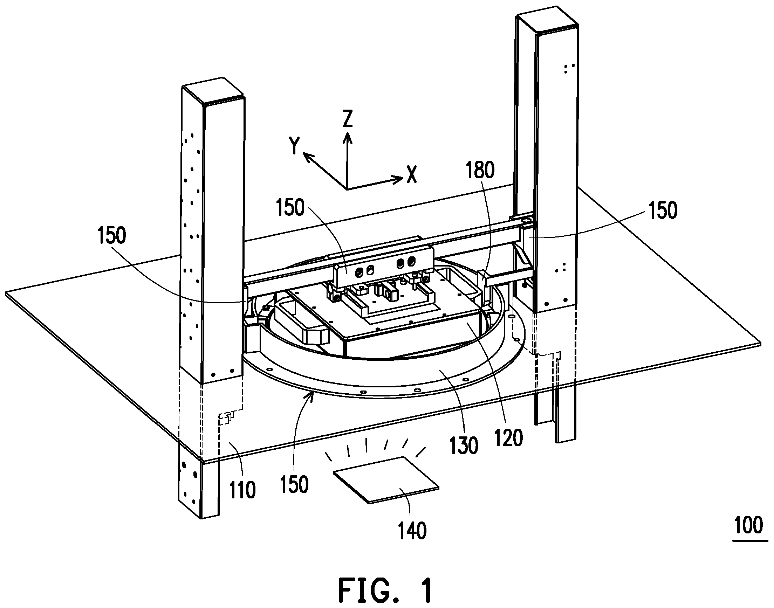

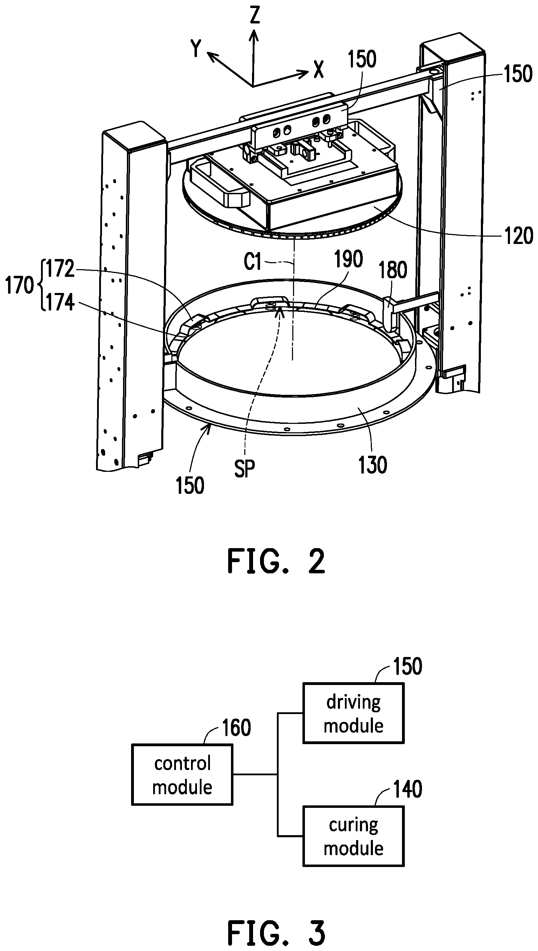

FIG. 1 is a schematic diagram of a 3D printer according to an embodiment of the disclosure. FIG. 2 is a schematic diagram of the 3D printer of FIG. 1 in another state, in which a part of structure is omitted for easy recognition. FIG. 3 is a diagram illustrating an electrical connection of a part of components of the 3D printer of FIG. 1. Cartesian coordinates X-Y-Z is provided to facilitate describing the components. Referring to FIG. 1 to FIG. 3, in the present embodiment, the 3D printer 100 is, for example, a StereoLithography Apparatus (SLA) including a machine platform 110, a forming platform 120, a container 130, a curing module 140, a driving module 150 and a control module 160. As shown in FIG. 1, the driving module 150 includes a gantry moving platform disposed on the machine platform 110, and the forming platform 120 is disposed on the gantry moving platform and is driven by the same, so as to implement movement on an X-Z plane. Moreover, the driving module 150 further includes a rotation mechanism disposed on the machine platform 110, and the container 130 is disposed on the rotation mechanism, and is adapted to rotate relative to the forming platform 120 about a rotation axis C1 (the rotation axis C1 is parallel to the Z-axis). The driving module 150 may be implemented by an existing motion mechanism, so that detail thereof is not repeated. The driving module 150 is electrically connected to and controlled by the control module 160, so as to implement the aforementioned driving operation.

The container 130 is used for containing a liquid forming material (for example, photopolymer), and the curing module 140 is disposed under the machine platform 110 and is electrically connected to the control module 160, such that when the forming platform 120 is driven and dipped into the liquid forming material in the container 130, the control module 160 drives the curing module 140 to provide a curing light (for example, an ultraviolet light) to pass through the bottom of the container 130 to cure the liquid forming material, such that the liquid forming material is cured to form a forming layer on the forming platform 120, and in collaboration with a pulling motion between the forming platform 120 and the container 130 (i.e. the forming platform 120 is driven to move towards a positive Z-axis direction to depart from the bottom of the container 130), the forming layer is peeled off from the bottom of the container 130 to achieve an effect of forming the forming layer on the forming platform 120. In this way, as the forming layers are stacked on the forming platform 120 layer-by-layer according to the aforementioned procedure, a 3D object is printed. The method of forming the 3D object and the corresponding components of the 3D printer 100 may be learned from the technique of the StereoLithography Apparatus (SLA), so that detail thereof is not repeated.

It should be noted that the 3D printer 100 of the present embodiment further includes at least one stirring element 170 and a driving element 180, where the stirring element 170 is disposed in the container 130 to rotate along with the container 130 about the rotation axis C1, and the stirring element 170 further has a motion mode of moving away from or moving close to the bottom of the container 130. The driving element 180 is fixed on the machine platform 110 and extends into the container 130, and the driving element 180 and the at least one stirring element 170 are mutually located on moving paths of each other. In this way, when the container 130 is driven by the driving module 150 to rotate about the rotation axis C1, the driving element 180 and the stirring element 170 may lean against each other to trigger the motion mode of the stirring element 170, i.e. the motion mode that the stirring element 170 moves away from or moves close to the bottom of the container 170, so as to stir the liquid forming material in the container 130. In the present embodiment, although the driving element 180 is disposed on the gantry moving platform and extends into the container, the position thereof is not limited thereto. It should be noted that based on the design of the stirring element 170 and the driving element 180 of the present embodiment, the stirring motion thereof performed on the liquid forming material in the container 130 may be simultaneously carried out along with the pulling motion between the forming platform 120 and the container 130. Namely, when the forming platform 120 is driven to move towards the positive Z-axis direction to depart from the bottom of the container 130, the container is generally rotated to assist an effect of the pulling motion, and based on the design of the stirring element 170 and the driving element 180 of the present embodiment, the rotation of the container 130 may also result in an operation of the stirring element 170 to produce a stirring effect to the forming liquid material in the container 130, by which a time required by an additional step of producing stirring is effectively saved.

As shown in FIG. 2, a plurality of stirring elements 170 are applied in the present embodiment, and the stirring elements 170 are arranged on the bottom of the container 130 at intervals. The container 130 is a round barrel, and the stirring elements 170 are located at an outermost edge on the bottom of the round barrel, and along with the rotation of the container 130, the driving element 180 in the fixed position may sequentially pass the stirring elements 170. Moreover, each of the stirring elements 170 includes a stirring portion and an elastic portion 174, and the elastic portion 174 is connected between the stirring portion and the container 130, and the stirring portion 172 may be regarded as a structure adapted to move relative to the container 130 along the Z-axis. Namely, the stirring element 170 may rotate along with the container 130 about the Z-axis, and when the driving element 180 passes and leans against the stirring portion 172, the driving element 180 may press the stirring portion 172 to deform the elastic portion 174, which results in a fact that the stirring portion 172 moves close to the bottom of the container 130; and when the driving element 180 moves away from the stirring element 170, an elastic force of the elastic portion 174 drives the stirring portion 172 for restoration, i.e. for moving away from the bottom of the container 130. In other words, along with the rotation of the container 130, the driving element 180 at least leans against/releases the stirring element 170 by once, such that the stirring effect is produced to the liquid forming material in the container 170 to avoid the situation that the liquid forming material in the container 170 maintains a stable state, so as to avoid the aforementioned light energy accumulation. It should be noted that the design of the stirring element 170 is not limited to the above embodiment, and those skilled in the art may adjust or design the stirring element 170 by themselves, for example, in the design of the stirring element 170, the elastic portion 174 may be omitted, and a spring sheet having elasticity may be taken as the stirring portion 172 to achieve the similar or same effect.

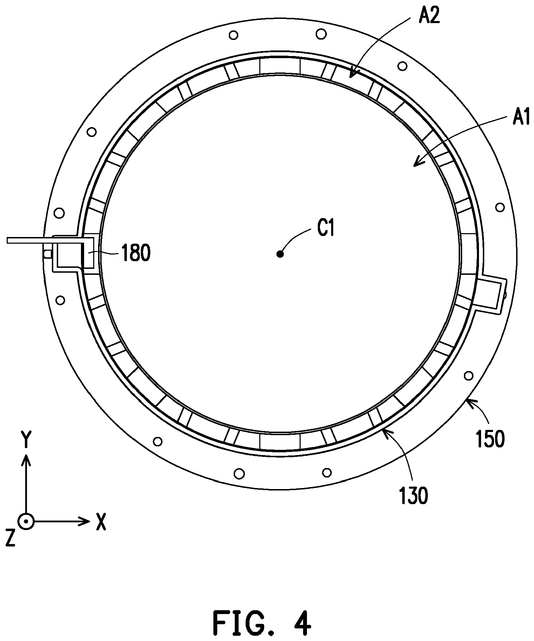

Further, FIG. 4 is a top view of the container of FIG. 2. Referring to FIG. 2 and FIG. 4, in the present embodiment, the plurality of stirring elements 170 are connected through a plurality of spacers 190, and the stirring elements 170 and the spacers 190 are arranged on the bottom of the container 130 in an interleaving manner, and the stirring elements 170 and the spacers 190 are all located on the moving path of the driving element 180. In other words, the stirring elements 170 and the spacers 190 of the present embodiment may be regarded as a monolithic structure and especially regarded as a wave structure. Namely, a height of each of the spacers 190 relative to the bottom of the container 130 is lower than a height of the driving element 180 relative to the bottom of the container 130, and a height of each of the stirring elements 170 relative to the bottom of the container 130 is higher than the height of the driving element 180 relative to the bottom of the container 130. In this way, when the driving element 180 passes the stirring elements 170 and the spacers 190, the driving element 180 may only structurally lean against the stirring elements 170 but does not structurally lean against the spacers 190, so that during the rotation process of the container 130, the driving element 180 intermittently leans against the stirring elements 170 to produce an intermittent flapping, stirring or shocking effect to the liquid forming material in the container 130.

Moreover, referring to FIG. 2, a bottom surface of the container 130 is divided into a forming area A1 and a non-forming area A2 that are not overlapped with each other. The forming platform 120 is moved into the container 130 and is located in the forming area A1, and the stirring element 170 is located in the non-forming area A2. In other words, as the driving element 180 and the stirring element 170 are located in the non-forming area A2, whether the driving element 180 and the stirring element 170 lean against each other is not affected by whether the forming platform 120 is executing the 3D printing, and such design may also avoid possibility of structural interference between the driving element 180, the stirring element 170 and the forming platform 120.

On the other hand, referring to FIG. 2 and FIG. 4, the container 130 forms a segment difference (a step) between the forming area A1 and the non-forming area A2, i.e. a bottom of the non-forming area A2 is lower than a bottom of the forming area A1 along the Z-axis, so that a space SP exists between the stirring portion 172 and the bottom of the container 130. When the stirring portion 172 is not pressed by the driving element 180, a part of the liquid forming material in the container 130 may flow into the space SP, and when the stirring portion 172 is pressed by the driving element 180, the liquid forming material in the space SP is squeezed out as the stirring portion 172 is pressed, and flows towards the forming area A1. In this way, through the design of the segment difference and the space SP in collaboration with the motion mode of the stirring element, an effect of sucking and releasing the liquid forming material as a pump does is produced, such that the liquid forming material in the container 130 has a specific flowing state.

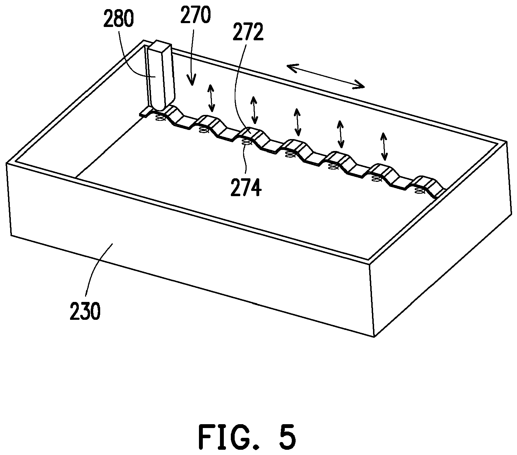

FIG. 5 is a partial schematic diagram of a 3D printer according to another embodiment of the disclosure. Different to the aforementioned embodiment, the container 230 of the present embodiment is a rectangular barrel, and the stirring elements 270 are disposed on at least one side in the rectangular barrel, and each of the stirring elements 270 also has the stirring portion 272 and the elastic portion 274, and the container 230 moves in a lateral back and forth moving manner. In this way, the stirring portions 272 of the stirring elements 270 may also be located on the moving path of the driving element 280, and aforementioned intermittent suck and release effect of the liquid forming material in the container 230 is also achieved, so as to form the flowing effect.

In summary, in the embodiments of the disclosure, in order to avoid the situation that the light energy accumulation influences the liquid forming material in the container, at least one stirring element is configured at the non-forming area of the container, and the driving element is disposed on the machine platform and extends into the container, and the driving element and the stirring element are mutually located on the moving paths of each other, such that the driving element may lean against stirring element to trigger the operation of the stirring element, for example, the motion mode of moving away from or moving close to the bottom of the container, so as to produce a stirring effect to the liquid forming material in the container.

Moreover, a plurality of stirring elements are disposed on the outer edge of the bottom surface of the container, so that during the rotation process of the container, the driving element may sequentially press the stirring elements to produce intermittent stirring, by which not only the liquid forming material is continuously stirred, but also the liquid forming material in the container may have a specific flowing effect as the space between the stirring element and the bottom of the container causes a suck and release effect to the liquid forming material.

## Claims

1. A three-dimensional printer (100), comprising:
a machine platform (110);
a container (130), configured to contain a liquid forming material, wherein the container (130) is movably assembled to the machine platform (110);
at least one stirring element (170), disposed in the container (130); and
a driving element (180), fixed on the machine platform (110) and extending into the container (130), **characterized in that** the stirring element (170) moves along with the container (130),
wherein the driving element (180) and the at least one stirring element (170) are mutually located on moving paths of each other, and during a moving process of the container (130), the driving element (180) and the at least one stirring element (170) lean against each other to trigger an operation of the stirring element (170), so as to stir the liquid forming material in the container (130).

2. The three-dimensional printer (100) as claimed in claim 1, wherein the stirring element (170) comprises a stirring portion (172) and an elastic portion (174), and the elastic portion (174) is connected between the stirring portion (172) and a bottom of the container (130), and when the driving element (180) passes the stirring element (170), the driving element (180) leans against the stirring portion (172) to deform the elastic portion (174), and when the driving element (180) moves away from the stirring element (170), the elastic portion (174) drives the stirring portion (172) for restoration.

3. The three-dimensional printer (100) as claimed in claim 1, further comprising a plurality of stirring elements (170) arranged on a bottom of the container (130) at intervals.

4. The three-dimensional printer (100) as claimed in claim 1, further comprising a plurality of stirring elements (170) and a plurality of spacers (190) arranged on a bottom of the container (130) in an interleaving manner and located on the moving path of the driving element (180), wherein a height of each of the spacers (190) relative to the bottom of the container (130) is lower than a height of the driving element (180) relative to the bottom of the container (130), and a height of each of the stirring elements (170) relative to the bottom of the container (130) is higher than the height of the driving element (180) relative to the bottom of the container (130).

5. The three-dimensional printer (100) as claimed in claim 4, wherein the stirring elements (170) and the spacers (190) form a wave structure.

6. The three-dimensional printer (100) as claimed in claim 4, wherein the stirring elements (170) and the spacers (190) form a monolithic structure.

7. The three-dimensional printer (100) as claimed in claim 2, wherein a space (SP) exists between the stirring portion (172) and the bottom of the container (130), and when the stirring portion (172) is not pressed by the driving element (180), a part of the liquid forming material in the container flows into the space (SP), and when the stirring portion (172) is pressed by the driving element (180), the liquid forming material in the space (SP) is squeezed out by the stirring portion (172).

8. The three-dimensional printer (100) as claimed in claim 1, further comprising a forming platform (120) movably disposed on the machine platform (110), and adapted to be moved into or moved out of the container (130), wherein a bottom of the container (130) is divided into a forming area (A1) and a non-forming area (A2), the forming platform (120) is moved into the container (130) and located in the forming area (A1), and the stirring element (170) is located in the non-forming area (A2).

9. The three-dimensional printer (100) as claimed in claim 1, wherein the container (130) is a round barrel, and the at least one stirring element (170) surrounds an outermost edge of a bottom of the round barrel.

10. The three-dimensional printer as claimed in claim 1, wherein the container (230) is a rectangular barrel, and the at least one stirring element (270) is disposed on at least one side in the rectangular barrel.

11. The three-dimensional printer as claimed in claim 1, wherein the stirring element (270) further has a motion mode of moving away from or moving close to a bottom of the container (230), and during a moving process of the container (230), the driving element (280) and the at least one stirring element (270) lean against each other to trigger the motion mode of the stirring element (270) to move away from or move close to the bottom of the container (230).

## Patentansprüche

1. 3D-Drucker (100), der Folgendes aufweist:
eine Maschinenpattform (110);
einen Behälter (130), der zum Halten eines flüssigen Formmaterials konfiguriert ist, wobei der Behälter (130) in bewegbarer Weise an der Maschinenpattform (110) montiert ist;
zumindest ein Rührelement (170), welches in dem Behälter (130) angeordnet ist; und
ein Antriebselement (180), welches an der Maschinenpattform (110) befestigt ist und sich in den Behälter (130) erstreckt, **dadurch gekennzeichnet, dass** das Rührelement (170) sich zusammen mit dem Behälter (130) bewegt,
wobei das Antriebselement (180) und das mindestens eine Rührelement (170) gegenseitig auf Bewegungspfaden voneinander angeordnet sind und während eines Bewegungsvorgangs des Behälters (130) das Antriebselement (180) und das mindestens eine Rührelement (170) aneinander lehnen bzw. drücken, um einen Betrieb des Rührelementes (170) auszulösen, um das flüssige Formmaterial in dem Behälter (130) zu rühren.

2. 3D-Drucker (100) nach Anspruch 1, wobei das Rührelement (170) einen Rührteil (172) und einen elastischen Teil (174) aufweist, und wobei der elastische Teil (174) zwischen dem Rührteil (172) und einem Unterteil des Behälters (130) angeschlossen ist, und wobei, wenn das Antriebselement (180) an dem Rührelement (170) vorbeiläuft, das Antriebselement (180) gegen den Rührteil (172) lehnt bzw. drückt, um den elastischen Teil (174) zu verformen, und wobei, wenn das Antriebselement (180) sich weg von dem Rührelement (170) bewegt, der elastische Teil (174) den Rührteil (172) zur Wiederherstellung antreibt.

3. 3D-Drucker (100) nach Anspruch 1, der weiter eine Vielzahl von Rührelementen (170) aufweist, die an einem Boden des Behälters (130) in Intervallen angeordnet sind.

4. 3D-Drucker (100) nach Anspruch 1, der weiter eine Vielzahl von Rührelementen (170) und eine Vielzahl von Abstandshaltern (190) aufweist, die an einem Boden des Behälters (130) in verschachtelter bzw. abwechselnder Weise angeordnet sind und auf dem Bewegungspfad des Antriebselementes (180) angeordnet sind, wobei eine Höhe von jedem der Abstandshalter (190) relativ zum Boden des Behälters (130) niedriger ist als eine Höhe des Antriebselementes (180) relativ zum Boden des Behälters (130), und wobei eine Höhe von jedem der Rührelemente (170) relativ zum Boden des Behälters (130) höher ist als die Höhe des Antriebselementes (180) relativ zum Boden des Behälters (130).

5. 3D-Drucker (100) nach Anspruch 4, wobei die Rührelemente (170) und die Abstandshalter (190) eine Wellenstruktur bilden.

6. 3D-Drucker (100) nach Anspruch 4, wobei die Rührelemente (170) und die Abstandshalter (190) eine monolithische Struktur bilden.

7. 3D-Drucker (100) nach Anspruch 2, wobei ein Freiraum (SP) zwischen dem Rührteil (172) und dem Boden des Behälters (130) vorhanden ist und wenn das Antriebselement (180) nicht auf den Rührteil (172) drückt, ein Teil des flüssigen Formmaterials in dem Behälter in den Freiraum (SP) fließt, und wobei, wenn das Antriebselement (180) auf den Rührteil (172) drückt, das flüssige Formmaterial in dem Freiraum (SP) durch den Rührteil (172) herausgedrückt wird.

8. 3D-Drucker (100) nach Anspruch 1, der weiter eine Formplattform (120) aufweist, die in bewegbarer Weise auf der Maschinenpattform (110) angeordnet ist und ausgebildet ist, um in den Behälter (130) hinein oder aus diesem heraus bewegt zu werden, wobei ein Boden des Behälters (130) in einen Formbereich (A1) und in einen Nicht-Formbereich (A2) unterteilt ist, wobei die Formplattform (120) in den Behälter (130) hinein bewegt wird und in dem Formbereich (A1) angeordnet ist, und wobei das Rührelement (170) in dem Nicht-Formbereich (A2) angeordnet ist.

9. 3D-Drucker (100) nach Anspruch 1, wobei der Behälter (130) ein rundes Rohr ist, und wobei das mindestens eine Rührelement (170) eine äußerste Kante eines Bodens des runden Rohrs umgibt.

10. 3D-Drucker (100) nach Anspruch 1, wobei der Behälter (230) ein rechteckiges Rohr ist, und wobei das mindestens eine Rührelement (270) an mindestens einer Seite in dem rechteckigen Rohr angeordnet ist.

11. 3D-Drucker (100) nach Anspruch 1, wobei das Rührelement (270) weiter einen Bewegungsmodus hat, in dem es sich weg von einem Boden des Behälters (230) oder zu diesem hin bewegt, und wobei, während eines Bewegungsvorgangs des Behälters (230), das Antriebselement (280) und das mindestens eine Rührelement (270) gegen einander lehnen bzw. drücken, um den Bewegungsmodus des Rührelementes (270) auszulösen, so dass es sich weg von dem Boden des Behälters (230) oder nahe dorthin bewegt.

## Revendications

1. Imprimante en trois dimensions (100), comprenant :
une plateforme de machine (110) ;
un conteneur (130), configuré pour contenir un matériau de formation liquide, dans laquelle le conteneur (130) est assemblé de façon amovible à la plateforme de machine (110) ;
au moins un élément d'agitation (170), placé dans le conteneur (130) ; et
un élément de commande (180), fixé sur la plateforme de machine (110) et s'étendant dans le conteneur (130), **caractérisée en ce que** l'élément d'agitation (170) se déplace avec le conteneur (130), dans laquelle l'élément de commande (180) et ledit au moins un élément d'agitation (170) sont mutuellement placés sur des trajets de déplacement de chacun, et, pendant un traitement de déplacement du conteneur (130), l'élément de commande (180) et ledit au moins un élément d'agitation (170) s'appuient l'un contre l'autre pour déclencher un fonctionnement de l'élément d'agitation (170), de façon à agiter le matériau de formation liquide dans le conteneur (130).

2. Imprimante en trois dimensions (100) selon la revendication 1, dans laquelle l'élément d'agitation (170) comprend une partie d'agitation (172) et une partie élastique (174), et dans laquelle la partie élastique (174) est connectée entre la partie d'agitation (172) et un fond du conteneur (130), et, quand l'élément de commande (180) passe au niveau de l'élément d'agitation (170), l'élément de commande (180) appuie contre la partie d'agitation (172) pour déformer la partie élastique (174), et, quand l'élément de commande s'éloigne de l'élément d'agitation (170), la partie élastique (174) commande la partie d'agitation (172) pour une restauration.

3. Imprimante en trois dimensions (100) selon la revendication 1, comprenant en outre une pluralité d'éléments d'agitation (170) agencés sur un fond du conteneur (130) à des intervalles.

4. Imprimante en trois dimensions (100) selon la revendication 1, comprenant en outre une pluralité d'éléments d'agitation (170) et une pluralité d'espaceurs (190) agencés sur un fond du conteneur (130) de sorte à être en appui et situés sur le trajet de déplacement de l'élément de commande (180), dans laquelle une hauteur de chacun des espaceurs (190) par rapport au fond du conteneur (130) est inférieure à une hauteur de l'élément de commande (180) par rapport au fond du conteneur (130), et une hauteur de chacun des éléments d'agitation (170) par rapport au fond du conteneur (130) est supérieure à la hauteur de l'élément de commande (180) par rapport au fond du conteneur (130).

5. Imprimante en trois dimensions (100) selon la revendication 4, dans laquelle les éléments d'agitation (170) et les espaceurs (190) forment une structure de vague.

6. Imprimante en trois dimensions (100) selon la revendication 4, dans laquelle les éléments d'agitation (170) et les espaceurs (190) forment une structure monolithique.

7. Imprimante en trois dimensions (100) selon la revendication 2, dans laquelle un espace (SP) existe entre la partie d'agitation (172) et le fond du conteneur (130), et, quand la partie d'agitation (172) n'est pas pressée par l'élément de commande (180), une partie du matériau de formation liquide dans le conteneur s'écoule dans l'espace (SP), et, quand la partie d'agitation (172) est pressée par l'élément de commande (180), le matériau de formation liquide dans l'espace (SP) est extrait par la partie d'agitation (172).

8. Imprimante en trois dimensions (100) selon la revendication 1, comprenant en outre une plateforme de formation (120) placée de façon amovible sur la plateforme de machine (110), et adaptée à être déplacée dans ou hors du conteneur (130), dans laquelle un fond du conteneur (130) est divisé en une zone de formation (A1) et une zone de non-formation (A2), la plateforme de formation (120) est déplacée dans le conteneur (130) et placée dans la zone de formation (A1), et l'élément d'agitation (170) est placé dans la zone de non-formation (A2).

9. Imprimante en trois dimensions (100) selon la revendication 1, dans laquelle le conteneur (130) est un baril rond, et ledit au moins un élément d'agitation (170) entoure une extrémité la plus externe d'un fond du baril rond.

10. Imprimante en trois dimensions selon la revendication 1, dans laquelle le conteneur (230) est un baril rectangulaire, et ledit au moins un élément d'agitation (270) est placé sur au moins un côté dans le baril rectangulaire.

11. Imprimante en trois dimensions selon la revendication 1, dans laquelle l'élément d'agitation (270) a en outre un mode de déplacement d'éloignement ou de rapprochement d'un fond du conteneur (230), et, pendant un processus de mouvement du conteneur (230), l'élément de commande (280) et ledit au moins un élément d'agitation (270) s'appuient l'un contre l'autre pour déclencher le mode de déplacement de l'élément d'agitation (270) pour s'éloigner ou se rapprocher du fond du conteneur (230).
